(19) **Europäisches Patentamt**
**European Patent Office**
**Office européen des brevets**

(11) **EP 2 257 451 B1**

(12) **EUROPÄISCHE PATENTSCHRIFT**

(45) Veröffentlichungstag und Bekanntmachung des Hinweises auf die Patenterteilung:
**28.09.2011 Patentblatt 2011/39**

(51) Int Cl.:
*B60T 13/52* *(2006.01)*  *B60T 17/22* *(2006.01)*
*B60T 17/02* *(2006.01)*  *B60T 13/66* *(2006.01)*

(21) Anmeldenummer: **08873237.5**

(22) Anmeldetag: **26.11.2008**

(86) Internationale Anmeldenummer:
**PCT/EP2008/066176**

(87) Internationale Veröffentlichungsnummer:
**WO 2009/112106 (17.09.2009 Gazette 2009/38)**

(54) **VERFAHREN ZUM ERKENNEN VON VERÄNDERUNGEN IN DER STEIFIGKEIT EINES HYDRAULISCHEN BREMSSYSTEMS**

METHOD FOR DETECTING CHANGES IN THE RIGIDITY OF A HYDRAULIC BRAKE SYSTEM

PROCÉDÉ DE DÉTECTION DES MODIFICATIONS DE LA RIGIDITÉ D'UN SYSTÈME DE FREINAGE HYDRAULIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.03.2008   DE 102008000628**

(43) Veröffentlichungstag der Anmeldung:
**08.12.2010   Patentblatt 2010/49**

(73) Patentinhaber: **Robert Bosch GmbH**
**70442 Stuttgart (DE)**

(72) Erfinder:
• **STEPHAN, Thilo**
**74080 Heilbronn (DE)**
• **KINDER, Ralf**
**71522 Backnang (DE)**
• **MAHNKOPF, Dirk**
**71634 Eglosheim (DE)**

(56) Entgegenhaltungen:
**US-A1- 2003 090 149     US-A1- 2004 090 347**
**US-A1- 2005 146 211**

EP 2 257 451 B1

**Beschreibung**

Stand der Technik

Die Erfindung betrifft ein Verfahren zum Erkennen von Steifigkeitsänderungen eines hydraulischen Kfz-Bremssystems sowie ein Steuergerät mit einem Algorithmus zum Durchführen des Verfahrens.

Bei bekannten hydraulischen Kfz-Bremsanlagen kann es insbesondere durch Lufteinschlüsse in der Bremsflüssigkeit zu Veränderungen der Brems-Charakteristik kommen. Veränderungen im Bremsverhalten können vom Fahrer bei Betätigung des Bremspedals normalerweise erkannt werden, da zum Erreichen der gleichen Fahrzeugverzögerung ein größerer Pedalweg zurückgelegt werden muss. Dies gilt jedoch nur für herkömmliche hydraulische Bremsanlagen, bei denen ein mechanischer Durchgriff zwischen dem Bremspedal und der Bremszange besteht. Dagegen liefern Bremsanlagen, bei denen das Bremspedal vom übrigen Bremssystem mechanisch entkoppelt ist, keine Rückmeldung über das Bremspedal.

Die Offenlegungsschrift US 2003/0090149 A1 befasst sich mit einer hydraulischen Bremsvorrichtung mit einer Hydraulikdruckerzeugungsvorrichtung zum Erzeugen und Abgeben eines hydraulischen Drucks in Übereinstimmung mit einem Bremsbetätigungsbetrag. Des Weiteren weist die Bremsvorrichtung einen hydraulischen Kreislauf für die Zufuhr eines hydraulischen Drucks zu einem Radzylinder auf, sowie eine Lufterfassungseinrichtung zum Erfassen einer in dem hydraulischen Kreislauf enthaltenen Luft. Die Erfassung der im Kreislauf enthaltenen Luft erfolgt über eine Ansprechzeit, die sich auf einen Anstieg des abgegebenen hydraulischen Drucks bezieht, der erfasst wird durch eine Abgabehydraulikdruckerfassungseinrichtung, sowie bezüglich einem Start eines Anstiegs des Bremsbetätigungsbetrags, der erfasst wird durch eine Bremsbetätigungsbetragserfassungseinrichtung.

Offenbarung der Erfindung

Es ist nun die Aufgabe der vorliegenden Erfindung, ein Verfahren zu schaffen, mittels dessen Steifigkeitsänderungen in (hydraulischen als auch bei entkoppelten) Bremssystemen automatisch erkannt werden können.

Gelöst wird diese Aufgabe gemäß der Erfindung durch die in den unabhängigen Ansprüchen angegebenen Merkmale. Weitere Ausgestaltungen der Erfindung sind Gegenstand von Unteransprüchen.

Ein wesentlicher Aspekt der Erfindung besteht darin, den in der Vakuumkammer des Unterdruck-Bremskraftverstärkers herrschenden Druck im betätigten und unbetätigten Zustand der Bremse zu messen und aus den gemessenen Drücken eine für das Bremsverhalten charakteristische Kenngröße, wie z.B. den von der Verstärkermembran oder dem Hauptbremszylinder zurückgelegten Weg, das vom Hauptbremszylinder verdrängte Volumen oder einfach nur die Druckdifferenz in beiden Zuständen zu berechnen und diese Kenngröße mit einem Referenzwert zu vergleichen. Dadurch wird es möglich, eine Änderung in der Steifigkeit des Bremssystems allein aufgrund des gemessenen Vakuumkammer-Drucks zu erkennen.

Der Referenzwert wird vorzugsweise als Funktion des hydraulischen Bremsdrucks (z.B. des Vordrucks) berechnet oder anhand einer Kennlinie bestimmt.

Gemäß einer ersten Ausführungsform der Erfindung wird als charakteristische Größe die Druckdifferenz zwischen dem Vakuumkammer-Druck im betätigten und unbetätigten Zustand berechnet und mit dem Referenzwert verglichen. Der Referenzwert $\Delta p$ kann beispielsweise mit folgender Beziehung

$$\Delta p = p_{FC}^{Rel.} - p_{FC}^{Appl.} = \frac{\left(s_B + \dfrac{V_{RC}^{Rel.}}{A_B}\right) \cdot \left(p_{MC}^{Appl.} \cdot (A_{MC} + \alpha) + D \cdot s_B + F_0\right)}{V_B} \tag{1}$$

als Funktion des hydraulischen Bremsdrucks $p_{MC}^{Appl.}$ berechnet oder aus einer entsprechenden Kennlinie ermittelt werden. (Zur Erläuterung der Formel siehe spezielle Figurenbeschreibung).

Bei dem Verfahren gemäß der ersten Ausführungsform wird der Vakuumkammer-Druck vorzugsweise zuerst im betätigten Zustand und danach im unbetätigten Zustand der Bremse gemessen.

Gemäß einer zweiten Ausführungsform der Erfindung wird der von der Membran des Bremskraftverstärkers zurückgelegte Weg oder eine dazu proportionale Größe als Funktion der gemessenen Vakuumkammer-Drücke im betätigten und unbetätigten Zustand bestimmt. Der von der Membran zurückgelegte Weg s kann beispielsweise gemäß folgender Beziehung ermittelt werden:

$$s_B^{Appl.} = \frac{V_{FC}^{Rel.} - V_{FC}^{Appl.}}{A_B} = \frac{V_{FC}^{Rel.}}{A_B} \cdot \left[ 1 - \left( \frac{p_{FC}^{Rel.}}{p_{FC}^{Appl.}} \right)^{1/\kappa} \right] \tag{2}$$

(Zur Erläuterung der Formel siehe spezielle Figurenbeschreibung).

Aus dem so berechneten Weg s wird vorzugsweise ein vom Hauptbremszylinder verdrängtes Volumen berechnet. Dieses Volumen $V_{MC}$ kann beispielsweise wie folgt berechnet werden:

$$V_{MC} = A_{MC} \cdot \left( s_B^{Appl.} - s_0 \right) \tag{3}$$

Das aus den Vakuumkammer-Drücken bestimmte Volumen $V_{MC}$ wird vorzugsweise mit einem aus einer im System hinterlegten p/V-Kennlinie ermittelten Volumen verglichen. Sofern die Abweichung größer ist als ein vorgegebener Schwellenwert, wird eine Veränderung der Steifigkeit des Bremssystems erkannt. Dies kann dem Fahrer zum Beispiel mittels einer Kontrollleuchte oder einer anderen Einrichtung angezeigt werden.

Kurze Beschreibung der Zeichnungen

Die Erfindung wird nachstehend anhand der beigefügten Zeichnungen beispielhaft näher erläutert. Es zeigen:

Fig. 1   eine schematische Ansicht eines Unterdruck-Bremskraftverstärkers;

Fig. 2   ein Flussdiagramm zur Darstellung der wesentlichen Verfahrensschritte eines Verfahrens zum Erkennen von Veränderungen der Steifigkeit eines Bremssystems; und

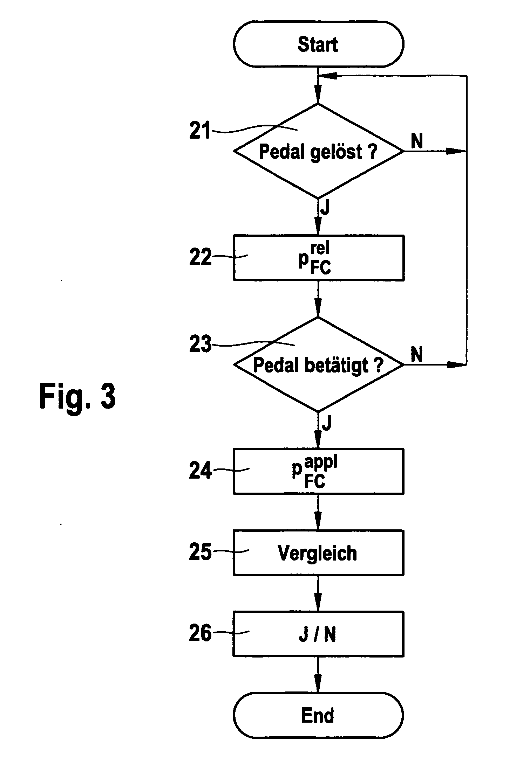

Fig. 3   ein Flussdiagramm zur Darstellung der wesentlichen Verfahrensschritte eines Verfahrens zum Erkennen von Veränderungen der Steifigkeit eines Bremssystems gemäß einer zweiten Ausführungsform der Erfindung.

Ausführungsformen der Erfindung

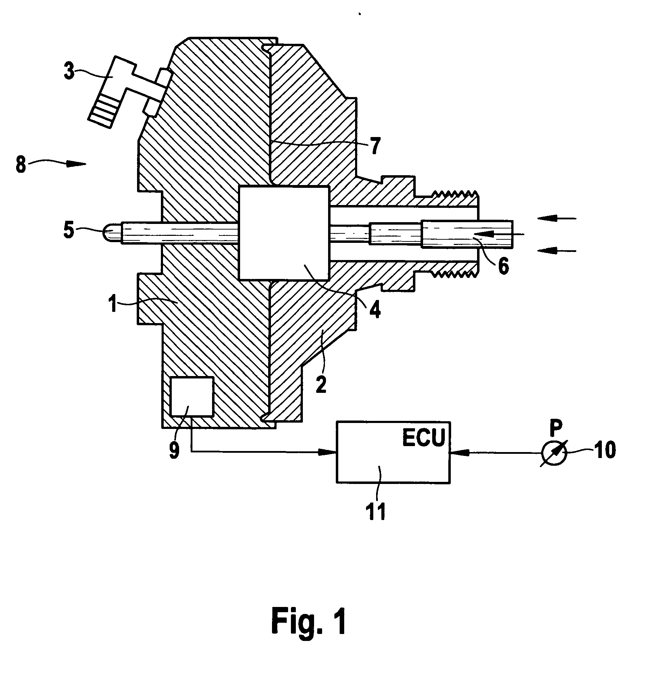

Fig. 1 zeigt eine schematische Darstellung eines herkömmlichen Unterdruck-Bremskraftverstärkers (UBKV), wie er aus dem Stand der Technik bekannt ist. Der UBKV umfasst im Wesentlichen eine Arbeitskammer 2, eine Vakuumkammer 1 mit einem Unterdruckanschluss 3 und eine Membran 7, die zwischen den beiden Kammern 1, 2 angeordnet ist. Am Unterdruckanschluss 3 ist eine Unterdruckquelle (nicht gezeigt) angeschlossen, die z.B. vom Verbrennungsmotor angetrieben wird und in der Vakuumkammer 1 einen vorgegebenen Unterdruck erzeugt. Im Zentralbereich des UBKV 8 ist ein Doppelventil 4 angeordnet, das zwei Funktionen erfüllt, nämlich a) die Arbeitskammer 2 von der Vakuumkammer 1 zu trennen oder die beiden Kammern 1, 2 miteinander zu verbinden und b) die Arbeitskammer 2 zu belüften oder von der Umgebungsluft zu trennen.

Im ungebremsten Zustand ist die Verbindung zwischen der Vakuumkammer 1 und der Arbeitskammer 2 offen. In beiden Kammern 1, 2 herrscht somit der gleiche Unterdruck. Bei einer Betätigung des Fuß-Bremspedals werden die beiden Kammern 1, 2 voneinander getrennt und die Arbeitskammer 2 belüftet.

Abhängig von dem über die Kolbenstange 6 eingestelltem Weg stellt sich ein Druckunterschied zwischen dem Druck in der Vakuumkammer 1 und dem Umgebungsdruck ein. Die aus der Druckdifferenz resultierende Kraft auf die Arbeitsmembran 7 verstärkt dabei die über die Kolbenstange 6 ausgeübte Bremskraft. Nach dem Lösen der Kraft F wird die Belüftung mit Umgebungsluft unterbrochen und das Kammerventil wieder geöffnet. Dadurch werden beide Kammern 1, 2 von der Unterdruckquelle mit Unterdruck beaufschlagt.

Im Unterschied zu bekannten UBKVs umfasst der dargestellte UBKV 8 eine Sensorik 9, 10, 11, mittels derer Änderungen in der Kraft-Weg-Charakteristik des Bremskraftverstärkers erfasst werden können. Die Sensorik umfasst hier einen in der Vakuumkammer 1 angeordneten Drucksensor 9, dessen Ausgangssignal von einem Steuergerät 11 ausgewertet wird, sowie einen Drucksensor 10 zur Messung eines hydraulischen Bremsdrucks (Vordruck), der ebenfalls mit dem Steuergerät 11 verbunden ist.

Variante 1: Bestimmung der Steifigkeit beim Lösen des Bremspedals

Gemäß einer ersten Ausführungsform der Erfindung wird der in der Vakuumkammer 1 herrschende Druck zunächst im betätigten und dann im gelösten Zustand der Bremse gemessen und daraus eine Druckdifferenz gebildet. Diese Druckdifferenz wird schließlich mit einem Referenzwert verglichen.

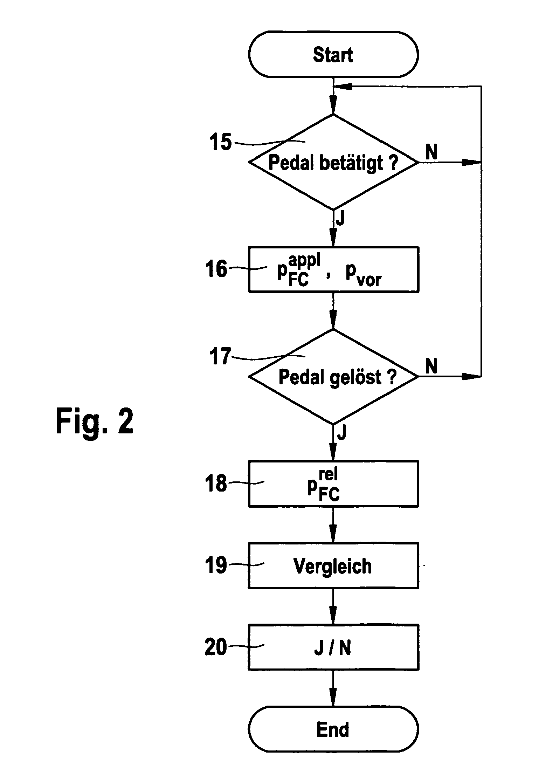

Figur 2 zeigt die wesentlichen Verfahrensschritte bei diesem Verfahren.

In Schritt 15 wird zunächst überwacht, ob das Fuß-Bremspedal betätigt und über einen vorgegebenen kurzen Zeitraum, z .B. wenigstens 500 ms, konstant gehalten wurde. Außerdem wird noch überprüft, ob der in der Vakuumkammer 1 herrschende Unterdruck konstant ist. Sind beide Bedingungen erfüllt, erfolgt in Schritt 16 eine Messung des Unterdrucks $p_{FC}^{appl}$ in der Vakuumkammer 1 (Index appl: applied bzw. betätigt, FC: Front Chamber bzw. Vakuumkammer), sowie des hydraulischen Bremsdrucks $p_{MC}^{appl}$ (Index MC: Master Cylinder bzw. Hauptbremszylinder).

Im folgenden Schritt 17 wird überwacht, ob sich die Bewegungsrichtung des Pedals ändert und die Bremse gelöst wird. Wenn das Fuß-Bremspedal eine vorgegebene kurze Zeit gelöst ist und der in der Vakuumkammer 1 herrschende Druck über einen vorgegebenen Zeitraum konstant ist, wird in Schritt 18 ein Druck-Messwert $p_{FC}^{Rel.}$ (Index Rel: released bzw. gelöst) aufgenommen, der der folgenden Berechnung zugrunde gelegt wird.

In Schritt 19 wird dann die Druckdifferenz $\Delta p = p_{FC}^{Rel.} - p_{FC}^{Appl.}$ aus den beiden Messwerten gebildet.

Für den Referenzwert wird folgende Gleichung angesetzt:

$$p_{FC}^{Rel.} - p_{FC}^{Appl.} = \frac{\left(s_B + \frac{V_{RC}^{Rel.}}{A_B}\right) \cdot \left(p_{MC}^{Appl.} \cdot (A_{MC} + \alpha) + D \cdot s_B + F_0\right)}{V_B} \tag{1}$$

Dabei bezeichnet $\alpha$ die druckabhängige Reibung der Dichtungen im Bremszylinder, D die Kraft der Federn und die druckabhängige Reibung, und $F_0$ die initiale Kraft, die über eine Druckdifferenz an der Membran 7 anliegen muss, bevor sich die Membran aus ihrer Ruheposition bewegt. Ferner ist $A_{MC}$ die wirksame Fläche des Hauptbremszylinders und $S_B$ der von der Membran bzw. dem Hauptbremszylinder zurückgelegte Weg.

Die Formel (1) kann aus folgenden Überlegungen abgeleitet werden. Für das gesamte Luftvolumen $V_B$ im Bremskraftverstärker 8 gilt:

$$V_B = konst. = V_{FC}^{Rel.} + V_{RC}^{Rel.} = V_{FC}^{Appl.} + V_{RC}^{Appl.} \tag{4}$$

$$p_{FC}^{Rel.} \cdot V_B = p_{FC}^{Appl.} V_{FC}^{Appl.} + p_{RC}^{Appl.} V_{RC}^{Appl.} \tag{5}$$

Bei Gl. (4) wurde angenommen, dass die Verbindung der Vakuumkammer 1 zur Vakuumversorgung während der Entlastung unterbrochen wurde. Falls dies nicht der Fall ist, wird zunächst der Druck der Vakuumversorgung $p_{vac}$ bestimmt, indem der Druck in der Vakuumkammer 1 gemessen wird, während der Bremskraftverstärker nicht betätigt ist. Während der Entlastung wird permanent der Druck in der Vakuumkammer 1 gemessen. Aus der Differenz des Kammerdrucks $p_{RC}$ und des Vakuumdrucks kann die während der Entlastung ausströmende Luftmasse bestimmt werden:

$$\Delta m = A_c \int \Psi\left(p_{RC}, p_{vac}\right) dt$$

mit der Funktion:

$$\Psi = \text{const.} = p_0 \sqrt{\frac{2}{RT}} \sqrt{\frac{\kappa}{\kappa+1}} \left(\frac{2}{\kappa+1}\right)^{\frac{1}{\kappa-1}} \quad \text{für} \quad p_{vac} < p_{RC} \left(\frac{2}{\kappa}\right)^{\frac{\kappa}{\kappa+1}}$$

$$\Psi = p_0 \sqrt{\frac{2}{RT}} \sqrt{\frac{\kappa}{\kappa-1}} \sqrt{\left(\frac{p_{vac}}{p_{RC}}\right)^{\frac{2}{\kappa}} - \left(\frac{p_{vac}}{p_{RC}}\right)^{\frac{\kappa+1}{\kappa}}} \quad \text{für} \quad p_{vac} \geq p_{RC} \left(\frac{2}{\kappa}\right)^{\frac{\kappa}{\kappa+1}}$$

Um aus Gleichung (5) die Verschiebung $s_B$ der Membran 7 berechnen zu können, muss der in der Arbeitskammer (Index RC: Rear Chamber) herrschende Druck $p_{RC}^{Appl.}$ . im betätigten Zustand bestimmt werden. Dazu wird das Kräftegleichgewicht zwischen dem Hauptbremszylinder und der Membran 7 im betätigten Zustand betrachtet:

$$p_{MC}^{Appl.} \cdot A_{MC} + p_{MC}^{Appl.} \cdot \alpha + D \cdot s_B + F_0 = A_B \left(p_{RC}^{Appl.} - p_{FC}^{Appl.}\right) \tag{6}$$

Dabei bezeichnet $\alpha$ die druckabhängige Reibung der Dichtungen im Bremszylinder, D die Kraft der Federn (Membran und Hauptbremszylinder) und die wegabhängige Reibung, und $F_0$ die initiale Kraft, die über eine Druckdifferenz an der Membran 7 anliegen muss, bevor sich die Membran aus ihrer Ruheposition bewegt.

Gl. (6) gilt nur für Systeme ohne mechanischen Kopplung. Im Falle üblicher Unterdruckbremskraftverstärker ist die Gleichung dahingehend zu modifizieren, dass die Eingangskraft $F_{in}$ berücksichtigt wird:

$$p_{MC}^{Appl.} \cdot A_{MC} + p_{MC}^{Appl.} \cdot \alpha + D \cdot s_B + F_0 = A_B \left(p_{RC}^{Appl.} - p_{FC}^{Appl.}\right) + F_{in}$$

Sofern der Aussteuerpunkt des Bremskraftverstärkers noch nicht erreicht wurde (was an $p_{MC}$ erkannt werden kann) kann die Verstärkung linear angenähert werden:

$$A_B \left(p_{RC}^{Appl.} - p_{FC}^{Appl.}\right) = \beta F_{in}$$

mit dem Verstärkungsfaktor $\beta$ . Wird nun die Größe $A_B$ durch $A_B\left(1+\frac{1}{\beta}\right)$ ersetzt behält, Gl. (6) auch im Falle herkömmlicher Unterdruckbremskraftverstärker ihre Gültigkeit.

Aus den Gleichungen (5) und (6) lässt sich nun der Weg $s_B$ der Membran 7 beim Lösen des Pedals berechnen:

$$s_B = -\left(\frac{A_B}{2 \cdot D} \cdot X + \frac{V_{RC}^{Rel.}}{2 \cdot A_B}\right) + \sqrt{\left(\frac{A_B}{2 \cdot D} \cdot X + \frac{V_{RC}^{Rel.}}{2 \cdot A_B}\right)^2 + \frac{\left(p_{FC}^{Rel.} - p_{FC}^{Appl.}\right) \cdot V_B - V_{RC}^{Rel.} \cdot X}{D}} \tag{7}$$

$$X := \frac{p_{MC}^{Appl.} \cdot \left(A_{MC} + \alpha\right) + F_0}{A_B} \tag{8}$$

Der aus den Gleichungen (7) und (8) berechnete Weg $s_B$ ließe sich direkt (bzw. nach Umrechnung des Wegs $s_B$ in ein Volumen V) mit der für das Bremssystem charakteristischen pV-Kennlinie vergleichen. Aus der Abweichung der beiden Werte könnte somit festgestellt werden, ob Lufteinschlüsse vorhanden sind oder nicht.

Da sich die Formel (7) in der vorliegenden Form aber nur mit hohem Aufwand in einem Steuergerät berechnen lässt, und für die Anwendung lediglich von Interesse ist, wann die Volumenaufnahme im Bremssystem eine gewisse Grenze überschreitet, wird folgende Vorgehensweise vorgeschlagen.

Zunächst werden die Gleichungen (7) und (8) nach dem Druckunterschied $\Delta p = p_{FC}^{Rel.} - p_{FC}^{Appl.}$ im betätigten und gelösten Zustand aufgelöst, so dass man folgende Gleichung erhält:

$$p_{FC}^{Rel.} - p_{FC}^{Appl.} = \frac{\left( s_B + \dfrac{V_{RC}^{Rel.}}{A_B} \right) \cdot \left( p_{MC}^{Appl.} \cdot \left( A_{MC} + \alpha \right) + D \cdot s_B + F_0 \right)}{V_B} \qquad (9)$$

Darin ist nur der vom Hauptzylinder zurückgelegte Weg $s_B$ unbekannt. Diese Größe kann über die nachstehende Gleichung als Funktion des hydraulischen Vordrucks $p_{MC}$ und aus der pV-Kennlinie des entlüfteten Bremssystems $V_{MC} = V_{MC}^{NoAir}\left( p_{MC} \right)$ bestimmt werden.

Die Formel (9) ist somit nur noch eine Funktion des hydraulischen Drucks $p_{MC}$ und liefert zu jedem gemessenen hydraulischen Druck $p_{MCr}^{Appl.}$ einen zugehörigen Wert für die zu erwartende Druckdifferenz $\Delta p$. Der gemessene Druck-unterschied $\Delta p$ muss somit nur mit dem aus der Kennlinie (9) ermittelten Druckunterschied verglichen werden. Wenn diese beiden Werte stärker voneinander abweichen als ein vorgegebener Schwellenwert, wird ein kritischer Zustand erkannt und ein entsprechendes Warnsignal ausgegeben.

Variante 2: Bestimmung der Steifigkeit beim Betätigen des Bremspedals

Gemäß einer zweiten Ausführungsform der Erfindung wird das bei einer Betätigung des Fuß-Bremspedals vom Hauptbremszylinder verschobene Volumen $V_{MC}$ ermittelt und mit der pV-Kennlinie des Systems verglichen. Für das Volumen der Vakuumkammer 1 (Index FC) im betätigten Zustand (Index Appl.) gilt:

$$V_{FC}^{Appl.} = V_{FC}^{Rel.} \cdot \left( \frac{p_{FC}^{Rel.}}{p_{FC}^{Appl.}} \right)^{1/\kappa} \qquad (10)$$

wobei wieder davon ausgegangen wurde, dass die Unterdruckversorgung unterbrochen wurde. Die Differenzmasse kann analog vorhergehendem Fall berechnet und berücksichtigt werden.

Dabei ist $p_{FC}^{Rel.}$ bzw. $p_{FC}^{Appl.}$ der Druck in der Vakuumkammer 1 im unbetätigten bzw. betätigten Zustand und $\kappa = 1$ für eine isotherme Zustandsänderung. Für den von der Membran 7 zurückgelegten Weg $s_B^{Appl.}$ gilt dann:

$$s_B^{Appl.} = \frac{V_{FC}^{Rel.} - V_{FC}^{Appl.}}{A_B} = \frac{V_{FC}^{Rel.}}{A_B} \cdot \left[ 1 - \left( \frac{p_{FC}^{Rel.}}{p_{FC}^{Appl.}} \right)^{1/\kappa} \right] \qquad (11)$$

wobei $A_B$ die effektive Fläche der Membran 7 ist. Das vom Hauptbremszylinder verschobene Volumen $V_{MC}$ lässt sich nun aus der Querschnittsfläche $A_{MC}$ des Hauptbremszylinders und dem Weg $s_B^{Appl.}$ berechnen, da der zurückgelegte Weg im Hauptbremszylinder 8 identisch zu dem Weg der Membran 7 abzüglich eines Leerwegs $s_0$ ist, bis im Haupt-bremszylinder (MC) ein Druckaufbau stattfindet. Es gilt:

$$V_{MC} = A_{MC} \cdot \left( s_B^{Appl.} - s_0 \right) \qquad\qquad (12)$$

Aus einem Vergleich von $V_{MC}$ mit der pV-Kennlinie des entlüfteten Bremssystems $V_{MC} = V_{MC}^{NoAir} \cdot \left( p_{MC} \right)$ lässt sich feststellen, ob sich Lufteinschlüsse im Bremssystem befinden.

**Patentansprüche**

1. Verfahren zum Erkennen von Veränderungen der Steifigkeit eines hydraulischen Bremssystems mit einem Unterdruck-Bremskraftverstärker (8), **gekennzeichnet durch** folgende Schritte:

   - Messen des in der Vakuumkammer (1) des Unterdruck-Bremskraftverstärkers (8) herrschenden Drucks ($p_{FC}$) im betätigten und unbetätigten Zustand der Bremse
   - Ermitteln einer für das Bremsverhalten charakteristischen Kenngröße ($s_B$, $V_{MC}$, $\Delta p$) als Funktion der gemessenen Vakuumkammer-Drücke, und
   - Vergleichen der charakteristischen Kenngröße mit einem Referenzwert.

2. Verfahren nach Anspruch 1, **dadurch gekennzeichnet, dass** die Druckdifferenz ($\Delta p$) zwischen dem gemessenen Vakuumkammer-Druck im betätigten und unbetätigten Zustand als charakteristische Größe berechnet und mit einem entsprechenden Referenzwert verglichen wird.

3. Verfahren nach Anspruch 2, **dadurch gekennzeichnet, dass** der Referenzwert als Funktion des hydraulischen Bremsdrucks ($p_{MC}$) ermittelt wird.

4. Verfahren nach Anspruch 3, **dadurch gekennzeichnet, dass** der Referenzwert gemäß folgender Beziehung:

$$p_{FC}^{Rel.} - p_{FC}^{Appl.} = \frac{\left( s_B + \dfrac{V_{RC}^{Rel.}}{A_B} \right) \cdot \left( p_{MC}^{Appl.} \cdot \left( A_{MC} + \alpha \right) + D \cdot s_B + F_0 \right)}{V_B}$$

oder aus einer entsprechenden Kennlinie ermittelt wird.

5. Verfahren nach Anspruch 4, **dadurch gekennzeichnet, dass** der von der Membran (7) zurück gelegte Weg ($s_B$) anhand einer im System hinterlegten pV-Kennlinie bestimmt wird.

6. Verfahren nach einem der vorhergehenden Ansprüche, **dadurch gekennzeichnet, dass** zuerst der Vakuumkammer-Druck $\left( p_{FC}^{Appl.} \right)$ im betätigten Zustand und danach im unbetätigten Zustand $\left( p_{FC}^{Rel} \right)$ der Bremse gemessen wird.

7. Verfahren nach Anspruch 1, **dadurch gekennzeichnet, dass** der von der Membran (7) zurückgelegte Weg ($s_B$) oder eine dazu proportionale Größe als Funktion der gemessenen Vakuumkammer-Drücke bestimmt wird.

8. Verfahren nach Anspruch 7, **dadurch gekennzeichnet, dass** der Weg ($s_B$) gemäß folgender Beziehung:

$$s_B^{Appl.} = \frac{V_{FC}^{Rel.} - V_{FC}^{Appl.}}{A_B} = \frac{V_{FC}^{Rel.}}{A_B} \cdot \left[ 1 - \left( \frac{p_{FC}^{Rel.}}{p_{FC}^{Appl.}} \right)^{1/\kappa} \right]$$

berechnet wird.

9. Verfahren nach Anspruch 8, **dadurch gekennzeichnet, dass** aus dem von der Membran (7) zurückgelegten Weg ($s_B$) ein vom Hauptbremszylinder verdrängtes Volumen ($V_{MC}$) bestimmt wird.

10. Verfahren nach Anspruch 9, **dadurch gekennzeichnet, dass** das vom Hauptbremszylinder verdrängte Volumen gemäß folgender Beziehung:

$$V_{MC} = A_{MC} \cdot \left(s_B^{Appl.} - s_0\right)$$

berechnet wird.

11. Verfahren nach Anspruch 10, **dadurch gekennzeichnet, dass** das aus den Vakuumkammer-Drücken bestimmte Volumen ($V_{MC}$) mit einem aus einer p/V Kennlinie ermittelten Volumen verglichen wird.

12. Steuergerät umfassend Mittel zum Durchführen eines der vorstehend beanspruchten Verfahren.

**Claims**

1. Method for detecting changes in the rigidity of a hydraulic brake system having a vacuum brake booster (8), **characterized by** the following steps:

   - measuring the pressure ($p_{FC}$) prevailing in the vacuum chamber (1) of the vacuum brake booster (8) in the actuated and non-actuated states of the brake,
   - ascertaining a characteristic value ($s_B$, $V_{MC}$. $\Delta p$) characteristic of the brake performance as a function of the measured vacuum chamber pressures, and
   - comparing the characteristic value with a reference value.

2. Method according to Claim 1, **characterized in that** the pressure difference ($\Delta p$) between the measured vacuum chamber pressure in the actuated and non-actuated states is calculated as characteristic quantity and compared with a corresponding reference value.

3. Method according to Claim 2, **characterized in that** the reference value is ascertained as a function of the hydraulic brake pressure ($p_{MC}$) -

4. Method according to Claim 3, **characterized in that** the reference value is ascertained in accordance with the following relationship:

$$p_{FC}^{Rel.} - p_{FC}^{Appl.} = \frac{\left(s_B + \dfrac{V_{RC}^{Rel.}}{A_B}\right) \cdot \left(p_{MC}^{Appl.} \cdot (A_{MC} + \alpha) + D \cdot s_B + F_0\right)}{V_B}$$,

or from a corresponding characteristic curve.

5. Method according to Claim 4, **characterized in that** the path ($s_B$) covered by the diaphragm (7) is determined with the aid of a pV curve stored in the system.

6. Method according to one of the preceding claims, **characterized in that** the vacuum chamber pressure $\left(p_{FC}^{Appl.}\right)$ is firstly measured in the actuated state of the brake, and thereafter in the non-actuated state $\left(p_{FC}^{Rel}\right)$ of the brake.

**7.** Method according to Claim 1, **characterized in that** the path ($s_B$) covered by the diaphragm (7), or a quantity proportional thereto is determined as a function of the measured vacuum chamber pressures.

**8.** Method according to Claim 7, **characterized in that** the path ($s_B$) is calculated in accordance with the following relationship:

$$s_B^{Appl.} = \frac{V_{FC}^{Rel.} - V_{FC}^{Appl.}}{A_B} = \frac{V_{FC}^{Rel.}}{A_B} \cdot \left[ 1 - \left( \frac{p_{FC}^{Rel.}}{p_{FC}^{Appl.}} \right)^{1/\kappa} \right].$$

**9.** Method according to Claim 8, **characterized in that** a volume ($V_{MC}$) displaced by the main brake cylinder is determined from the path ($s_B$) covered by the diaphragm (7).

**10.** Method according to Claim 9, **characterized in that** the volume displaced from the main brake cylinder is calculated in accordance with the following relationship:

$$V_{MC} = A_{MC} \cdot \left( s_B^{Appl.} - s_0 \right)$$

**11.** Method according to Claim 10, **characterized in that** the volume ($V_{MC}$) determined from the vacuum chamber pressures is compared with a volume ascertained from a p/V characteristic curve.

**12.** Controller comprising means for carrying out one of the above-claimed methods.

## Revendications

**1.** Procédé de détection de modifications de la rigidité d'un système de freinage hydraulique comprenant un servofrein à dépression (8), **caractérisé par** les étapes suivantes :

- mesure de la pression ($\rho_{FC}$) régnant dans la chambre à vide (1) du servofrein à dépression (8) dans l'état actionné et non actionné du frein,
- détection d'une grandeur caractéristique du comportement de freinage ($S_B$, $V_{MC}$, $\Delta\rho$) en fonction des pressions mesurées dans la chambre à vide, et
- comparaison des grandeurs caractéristiques avec une valeur de référence.

**2.** Procédé selon la revendication 1, **caractérisé en ce que** la différence de pression ($\Delta\rho$) entre la pression mesurée dans la chambre à vide dans l'état actionné et non actionné est calculée en tant que grandeur caractéristique et est comparée avec une valeur de référence correspondante.

**3.** Procédé selon la revendication 2, **caractérisé en ce que** la valeur de référence est déterminée en fonction de la pression de freinage hydraulique ($\rho_{MC}$).

**4.** Procédé selon la revendication 3, **caractérisé en ce que** la valeur de référence est déterminée en fonction de la relation suivants :

$$\rho_{FC}^{Rel.} - \rho_{FC}^{Appl.} = \frac{\left( S_B + \frac{V_{RC}^{Rel.}}{A_B} \right) \cdot \left( \rho_{MC}^{Appl.} \cdot \left( A_{MC} + \alpha \right) + D \cdot S_B + F_0 \right)}{V_B}$$

ou à partir d'une courbe caractéristique correspondante.

**5.** Procédé selon la revendication 4, **caractérisé en ce que** la course ($S_B$) parcourue par la membrane (7) est déterminée à l'aide d'une courbe caractéristique $\rho V$ déposée dans le système.

**6.** Procédé selon l'une quelconque des revendications précédentes, **caractérisé en ce que** la pression dans la chambre à vide ( $\rho_{FC}^{Appl.}$ ) est d' abord mesurée dans l'état actionné et ensuite dans l'état non actionné ( $\rho_{FC}^{Rel.}$ ) du frein.

**7.** Procédé selon la revendication 1, **caractérisé en ce que** la course ($S_B$) parcourue par la membrane (7), ou une grandeur qui lui est proportionnelle, est déterminée en fonction des pressions mesurées dans la chambre à vide.

**8.** Procédé selon la revendication 7, **caractérisé en ce que** la course ($S_B$) est calculée en fonction de la relation suivants :

$$S_B^{Appl.} = \frac{V_{FC}^{ref.} - V_{FC}^{Appl.}}{A_B} = \frac{V_{FC}^{rel.}}{A_B} \cdot \left[ 1 - \left( \frac{\rho_{FC}^{rel.}}{\rho_{FC}^{Appl.}} \right)^{1/\kappa} \right]$$

**9.** Procédé selon la revendication 8, **caractérisé en ce que** l'on détermine à partir de la course ($S_B$) parcourue par la membrane (7), un volume ($V_{MC}$) refoulé par le cylindre de frein principal.

**10.** Procédé selon la revendication 9, **caractérisé en ce que** le volume refoulé par le cylindre de frein principal est calculé en fonction de la relation suivants :

$$V_{MC} = A_{MC} \cdot \left( S_B^{Appl.} - S_0 \right)$$

**11.** Procédé selon la revendication 10, **caractérisé en ce que** le volume ($V_{MC}$) déterminé à partir des pressions dans la chambre à vide est comparé à un volume obtenu à partir d'une courbe caractéristique p/V.

**12.** Appareil de commande comprenant des moyens pour mettre en oeuvre l'un des procédés revendiqués ci-dessus.

**Fig. 1**

**Fig. 2**

**Fig. 3**

Start

21 — Pedal gelöst ? — N

J

22 — $p_{FC}^{rel}$

23 — Pedal betätigt ? — N

J

24 — $p_{FC}^{appl}$

25 — Vergleich

26 — J / N

End

**EP 2 257 451 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030090149 A1